# EUROPÄISCHE PATENTSCHRIFT

(11) **EP 4 000 350 B1**
(45) Veröffentlichungstag und Bekanntmachung des Hinweises auf die Patenterteilung: **12.11.2025**
(21) Anmeldenummer: 20737171.7
(22) Anmeldetag: 07.07.2020
(51) Int. Cl.: H05B 6/12, F24C 15/32

(54) **OFENVORRICHTUNG**
OVEN APPARATUS
DISPOSITIF DE FOUR

(30) Priorität: 15.07.2019 DE 102019210395
(43) Veröffentlichungstag der Anmeldung: 25.05.2022
(73) Patentinhaber: BSH Hausgeräte GmbH, 81739 München (DE)
(72) Erfinder: NEUMAYER, Dan, 83233 Bernau (DE); SANROMAN HERNANDEZ, Luis, 50003 Zaragoza (ES); OBON ABADIA, Carlos, 50016 Santa Isabel (Zaragoza) (ES)
(86) Internationale Anmeldenummer: PCT/EP2020/069073
(87) Internationale Veröffentlichungsnummer: WO 2021/008935

(56) Entgegenhaltungen:
- WO-A1-2018/116059
- WO-A2-2013/156922
- DE-A1- 2 852 472
- DE-B3- 102004 051 284
- US-A- 4 040 042

## Beschreibung

Die Erfindung betrifft eine Ofenvorrichtung nach dem Oberbegriff des Anspruchs.

Aus dem Stand der Technik ist bereits eine Ofenvorrichtung bekannt, welche eine Gebläseeinheit aufweist. Die Gebläseeinheit weist ein Gebläserad und zumindest einen Antriebsmotor auf, welcher in einem Betriebszustand das Gebläserad antreibt. Eine Sensoreinheit der Ofenvorrichtung detektiert in dem Betriebszustand eine elektrische Gebläsekenngröße der Gebläseeinheit. Eine Steuereinheit der Ofenvorrichtung wertet in dem Betriebszustand die Gebläsekenngröße aus und überwacht in Abhängigkeit von der Gebläsekenngröße eine Funktion des Antriebsmotors.

Die Aufgabe der Erfindung besteht insbesondere darin, eine gattungsgemäße Vorrichtung mit verbesserten Eigenschaften hinsichtlich eines Bedienkomforts bereitzustellen. Die Aufgabe wird erfindungsgemäß durch die Merkmale der Ansprüche 1 gelöst, während vorteilhafte Ausgestaltungen und Weiterbildungen der Erfindung den Unteransprüchen entnommen werden können.

Die Erfindung geht aus von einer Ofenvorrichtung, insbesondere von einer Induktionsofenvorrichtung, mit zumindest einer Gebläseeinheit, welche insbesondere zumindest ein Gebläserad und insbesondere zumindest einen Antriebsmotor zu einem Antrieb des Gebläserads aufweist, und mit zumindest einer Sensoreinheit, welche zu einer Detektion zumindest einer elektrischen und/oder elektronischen Gebläsekenngröße der Gebläseeinheit, insbesondere des Antriebsmotors, vorgesehen ist.

Es wird vorgeschlagen, dass die Ofenvorrichtung zumindest eine Steuereinheit aufweist, welche dazu vorgesehen ist, in Abhängigkeit von der Gebläsekenngröße zumindest eine Filterkenngröße zumindest einer Filtereinheit, welche der Gebläseeinheit zugeordnet ist, zu ermitteln.

Durch eine derartige Ausgestaltung kann insbesondere ein hoher Bedienkomfort erreicht werden. Es kann insbesondere auf eine separate und/oder zusätzliche Sensoreinheit, welche zu einer Detektion der Filterkenngröße vorgesehen ist, verzichtet werden, wodurch insbesondere eine kostengünstige Ausgestaltung und/oder eine geringe Lagerhaltung erzielt werden kann. Insbesondere kann durch Kenntnis der Filterkenngröße ein ordnungsgemäßer Betrieb ermöglicht und/oder eine Beschädigung der Filtereinheit vermieden werden. Einem Bediener kann insbesondere eine manuelle Sicherstellung eines ordnungsgemäßen Betriebs abgenommen werden, wodurch insbesondere ein hoher Bedienkomfort erzielt werden kann.

Unter einer "Ofenvorrichtung", insbesondere unter einer "Induktionsofenvorrichtung", soll insbesondere zumindest ein Teil, insbesondere eine Unterbaugruppe, eines Ofens, insbesondere eines Induktionsofens, verstanden werden.

Insbesondere weist die Ofenvorrichtung zumindest eine Muffel auf, welche insbesondere zumindest einen Garraum wenigstens teilweise definiert und/oder begrenzt. Die Ofenvorrichtung weist insbesondere zumindest eine Gerätetür auf, welche insbesondere den Garraum wenigstens teilweise definiert und/oder begrenzt. Unter der Wendung, dass ein Objekt zumindest einen Garraum "wenigstens teilweise" definiert und/oder begrenzt, soll insbesondere verstanden werden, dass das Objekt den Garraum alleine oder gemeinsam mit zumindest einem weiteren Objekt definiert und/oder begrenzt. Insbesondere definieren und/oder begrenzen die Muffel und die Gerätetür in einem Betriebszustand den Garraum gemeinsam, insbesondere wenigstens zu einem Großteil, vorteilhaft wenigstens im Wesentlichen und besonders vorteilhaft vollständig. Unter "wenigstens zu einem Großteil" soll insbesondere zu einem Anteil, insbesondere einem Massenanteil und/oder einem Volumenanteil und/oder einem Anteil einer Anzahl, von mindestens 70 %, insbesondere von mindestens 80 %, vorteilhaft von mindestens 90 % und vorzugsweise von mindestens 95 % verstanden werden.

Unter einer "Gebläseeinheit" soll insbesondere eine Einheit verstanden werden, welche, insbesondere mittels des Gebläserads, zumindest einen, insbesondere gerichteten, Luftstrom, insbesondere zumindest eines gasförmigen Dispersionsmediums, bereitstellt. Die Gebläseeinheit bläst, insbesondere mittels des Gebläserads, insbesondere den Luftstrom in zumindest eine bestimmte Richtung. Insbesondere saugt die Gebläseeinheit mittels eines Ansaugdrucks zumindest ein gasförmiges Dispersionsmedium, insbesondere Luft, an und stellt das angesaugte gasförmige Dispersionsmedium mittels eines Ausblasdrucks bereit. Insbesondere treibt die Antriebseinheit in einem Betriebszustand das Gebläserad an. Die Antriebseinheit weist insbesondere zumindest einen Elektromotor auf und ist insbesondere als ein Elektromotor ausgebildet.

Unter einer "Sensoreinheit" soll insbesondere eine Einheit verstanden werden, welche zumindest einen Detektor zu einer Detektion wenigstens einer Sensorkenngröße aufweist und welche insbesondere dazu vorgesehen ist, einen die Sensorkenngröße kennzeichnenden Wert auszugeben, wobei es sich bei der Sensorkenngröße vorteilhaft um eine physikalische und/oder chemische Größe handelt. Beispielsweise könnte die Sensoreinheit die Sensorkenngröße in einem Betriebszustand aktiv detektieren, wie insbesondere durch Erzeugen und Aussenden eines Messsignals, insbesondere eines elektrischen und/oder optischen Messsignals. Alternativ oder zusätzlich könnte die Sensoreinheit die Sensorkenngröße in einem Betriebszustand insbesondere passiv detektieren, wie insbesondere durch eine Erfassung von zumindest einer Eigenschaftsänderung zumindest eines Sensorbauteils und/oder des Detektors. Die Sensorkenngröße weist insbesondere zumindest die Gebläsekenngröße auf und ist insbesondere als die Gebläsekenngröße ausgebildet.

Die Gebläsekenngröße könnte beispielsweise zumindest einen elektrischen Strom umfassen, welchen die Gebläseeinheit, insbesondere der Antriebsmotor, insbesondere in einem Betriebszustand führen könnte und/oder welcher insbesondere zu einem Betrieb des Antriebsmotors vorgesehen sein könnte. Insbesondere alternativ oder zusätzlich könnte die Gebläsekenngröße zumindest eine elektrische Spannung umfassen, welche insbesondere in einem Betriebszustand an der Gebläseeinheit, insbesondere an dem Antriebsmotor, anliegen könnte und/oder welche insbesondere zu einem Betrieb des Antriebsmotors vorgesehen sein könnte. Beispielsweise könnte die Gebläsekenngröße, insbesondere alternativ oder zusätzlich, zumindest eine elektrische Leistung umfassen, welche insbesondere zu einem Antrieb der Gebläseeinheit, insbesondere des Antriebsmotors, vorgesehen sein könnte und/oder welche insbesondere zu einem Betrieb des Antriebsmotors vorgesehen sein könnte. Insbesondere alternativ oder zusätzlich könnte die Gebläsekenngröße zumindest eine Umdrehungszahl, insbesondere des Antriebsmotors und/oder des Gebläserads, umfassen. Die Sensoreinheit könnte beispielsweise, insbesondere alternativ oder zusätzlich, zumindest eine Temperatur, insbesondere der Gebläseeinheit und/oder vorteilhaft des Antriebsmotors, detektieren.

Unter einer "Steuereinheit" soll insbesondere eine elektronische Einheit verstanden werden, welche in einem Betriebszustand zumindest eine Gargerätefunktion und/oder zumindest eine Gargerätehauptfunktion, insbesondere eine Beheizung der Muffel, steuert und/oder regelt. Die Steuereinheit weist insbesondere zumindest eine Recheneinheit und insbesondere zusätzlich zu der Recheneinheit zumindest eine Speichereinheit auf, in welcher insbesondere zumindest ein Steuer- und/oder Regelprogramm gespeichert ist, das insbesondere zu einer Ausführung durch die Recheneinheit vorgesehen ist. Insbesondere ist die Steuereinheit dazu vorgesehen, zumindest ein von der Steuereinheit verschiedenes, insbesondere elektrisches und/oder elektronisches Gargeräteobjekt zu steuern und/oder zu regeln. Unter einem "Gargeräteobjekt" soll insbesondere zumindest ein Teil, insbesondere eine Unterbaugruppe, eines Gargeräts, insbesondere eines Induktionsgargeräts, verstanden werden. Zumindest ein Gargeräteobjekt könnte beispielsweise zumindest eine Bedienerschnittstelle und/oder zumindest eine Heizeinheit und/oder zumindest ein Wechselrichter und/oder zumindest die Gebläseeinheit und/oder zumindest eine Gargeräteelektronik sein.

Die Ofenvorrichtung weist insbesondere zumindest eine Filtereinheit und vorteilhaft zumindest die Filtereinheit auf. Unter der Wendung, dass die Filtereinheit der Gebläseeinheit "zugeordnet" ist, soll insbesondere verstanden werden, dass die Filtereinheit zu einer Filterung zumindest eines von der Gebläseeinheit bewirkten Luftstroms vorgesehen ist. Bei dem Luftstrom könnte es sich beispielsweise um einen Ansaugstrom und/oder um einen Ausblasstrom handeln. In einem montierten Zustand der Filtereinheit ist die Filtereinheit insbesondere in einem Nahbereich der Gebläseeinheit, insbesondere des Gebläserads, angeordnet.

Die Filtereinheit ist vorteilhaft zu einer Filterung zumindest eines von der Gebläseeinheit bewirkten Ansaugstroms vorgesehen, welchen die Gebläseeinheit insbesondere aus dem Garraum heraus ansaugt. Unter einer "Filtereinheit" soll insbesondere eine Einheit verstanden werden, welche dazu vorgesehen ist, in einem Betriebszustand in zumindest einem Luftstrom, welcher insbesondere von der Gebläseeinheit hervorgerufen ist, gelöste Partikel zu filtern und insbesondere aus dem Luftstrom wenigstens teilweise zu entfernen. Die Partikel könnten beispielsweise Fettpartikel sein.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Steuereinheit zu der Ermittlung der Filterkenngröße zumindest eine weitere Gebläsekenngröße, insbesondere jede weitere Gebläsekenngröße, wenigstens im Wesentlichen und vorteilhaft vollständig konstant hält.

Die weitere Gebläsekenngröße könnte beispielsweise zumindest einen elektrischen Strom und/oder zumindest eine elektrische Spannung und/oder zumindest eine elektrische Leistung und/oder zumindest eine Umdrehungszahl umfassen. Insbesondere im Fall, in welchem die Gebläsekenngröße zumindest einen elektrischen Strom umfasst, könnte die Steuereinheit zu der Ermittlung der Filterkenngröße zumindest eine weitere Gebläsekenngröße wenigstens im Wesentlichen konstant halten, welche zumindest eine elektrische Spannung und/oder zumindest eine Umdrehungszahl umfasst. Unter der Wendung, dass die Steuereinheit zu der Ermittlung der Filterkenngröße zumindest eine weitere Gebläsekenngröße "wenigstens im Wesentlichen konstant" hält, soll insbesondere verstanden werden, dass die Steuereinheit zu der Ermittlung der Filterkenngröße einen Wert der weiteren Gebläsekenngröße in einem Bereich hält, welcher durch einen Minimalwert und einen Maximalwert begrenzt und/oder definiert ist und bei welchem ein Quotient aus dem Minimalwert und dem Maximalwert einen Wert von mindestens 0,8, insbesondere von mindestens 0,85, vorteilhaft von mindestens 0,9, besonders vorteilhaft von mindestens 0,92, vorzugsweise von mindestens 0,95 und besonders bevorzugt von mindestens 0,98 annimmt. Dadurch kann insbesondere eine optimale Auswertung der Filterkenngröße ermöglicht werden, da insbesondere weitere Einflussfaktoren minimiert werden können.

Die Steuereinheit könnte bei der Ermittlung der Filterkenngröße zumindest eine Referenzgebläsekenngröße berücksichtigen. Insbesondere könnte die Steuereinheit die Referenzgebläsekenngröße von zumindest einer weiteren Einheit beziehen. Die weitere Einheit könnte beispielsweise eine Bedienerschnittstelle aufweisen und/oder als Bedienerschnittstelle ausgebildet sein. Vorteilhaft könnte die weitere Einheit zumindest eine externe Einheit aufweisen und/oder als externe Einheit ausgebildet sein. Die externe Einheit könnte beispielsweise ein Mobilgerät und/oder ein Netzwerk, wie beispielsweise das Internet, sein. Vorzugsweise weist die Steuereinheit zumindest eine Speichereinheit auf, in welcher zumindest eine Referenzgebläsekenngröße gespeichert ist, welche die Steuereinheit bei der Ermittlung der Filterkenngröße berücksichtigt. Die Referenzgebläsekenngröße ist insbesondere als eine Referenzkenngröße, welche der Gebläsekenngröße zugeordnet ist, ausgebildet. Insbesondere vergleicht die Steuereinheit zu der Ermittlung der Filterkenngröße die Gebläsekenngröße mit der Referenzgebläsekenngröße. In der Speichereinheit sind beispielsweise zumindest zwei, insbesondere zumindest drei, vorteilhaft zumindest vier, besonders vorteilhaft zumindest sechs, vorzugsweise zumindest acht und besonders bevorzugt eine Vielzahl an Referenzgebläsekenngrößen gespeichert. Dadurch kann die Filterkenngröße insbesondere besonders exakt ermittelt werden, wodurch insbesondere ein hoher Bedienkomfort bereitgestellt werden kann.

Weiterhin wird vorgeschlagen, dass die Ofenvorrichtung, insbesondere zumindest, die Filtereinheit und zumindest eine Luftführungseinheit aufweist, welche insbesondere zu einer Führung zumindest eines von der Gebläseeinheit hervorgerufenen Luftstroms vorgesehen ist und an welcher die Filtereinheit reversibel anordenbar ist. Insbesondere ist die Filtereinheit, insbesondere zerstörungsfrei, werkzeuglos lösbar an der Luftführungseinheit anordenbar und/oder von der Luftführungseinheit trennbar. Beispielsweise könnte die Filtereinheit in einem montierten Zustand der Filtereinheit mittels zumindest einer Schraubverbindung und/oder mittels zumindest einer Rastverbindung und/oder mittels zumindest einer durch Klemmung hervorgerufenen Verbindung und/oder mittels zumindest einer durch Verriegelung hervorgerufenen Verbindung an der Luftführungseinheit angeordnet sein. Dadurch kann insbesondere eine hohe Flexibilität erreicht werden. Insbesondere kann die Filtereinheit in ausgewählten Garprozessen, in welchen insbesondere eine Anwesenheit der Filtereinheit vorteilhaft ist, an der Luftführungseinheit angeordnet werden und in weiteren Garprozessen, in welchen insbesondere auf eine Anwesenheit der Filtereinheit verzichtet werden kann, auf die Filtereinheit verzichtet werden. Hierdurch kann insbesondere eine langlebige Ausgestaltung, insbesondere der Filtereinheit, erzielt werden. Insbesondere könnte der ausgewählte Garprozess zumindest einen als "Pyrolyse" bezeichneten Garprozess und/oder zumindest einen als "Barbecue" bezeichneten Garprozess umfassen. Insbesondere könnte der weitere Garprozess zumindest einen als "Heißluft" bezeichneten Garprozess umfassen.

Ferner wird vorgeschlagen, dass die Filtereinheit zumindest einen Rauchfilter aufweist und insbesondere als Rauchfilter ausgebildet ist. Insbesondere weist die Filtereinheit zumindest ein Filterelement mit einer insbesondere definierten Porengröße auf, welche insbesondere eine von der Filtereinheit filterbare Partikelgröße festlegt. Durch Wahl und/oder Einstellung der Porengröße ist insbesondere ein Druck in dem Garraum einstellbar. Insbesondere ist die Porengröße ausreichend groß gewählt, um ein Ansaugen von Rauch durch die Gebläseeinheit aus dem Garraum zu ermöglichen und/oder zu gewährleisten. Die Porengröße ist insbesondere möglichst klein gewählt, um insbesondere eine Filterung von in dem Luftstrom befindlichen Partikeln einer bestimmten Größe zu ermöglichen und/oder zu gewährleisten. Dadurch kann insbesondere aus dem Garraum abgesaugter Rauch gefiltert werden, wodurch insbesondere eine Verschmutzung der Gebläseeinheit erzielt und/oder einem Bediener eine geringe Reinigungsfrequenz ermöglicht werden kann. Es kann insbesondere eine langlebige Ausgestaltung erreicht werden.

Zudem wird vorgeschlagen, dass die Ofenvorrichtung zumindest eine Muffel aufweist, welche zumindest einen Garraum wenigstens teilweise begrenzt, innerhalb welchem die Filtereinheit in wenigstens einem montierten Zustand der Filtereinheit angeordnet ist. Insbesondere ist die Filtereinheit in dem montierten Zustand der Filtereinheit auf einer dem Garraum zugewandten Seite der Gebläseeinheit angeordnet. Dadurch kann insbesondere eine einfache Zugänglichkeit der Filtereinheit ermöglicht werden, wodurch ein Bediener die Filtereinheit insbesondere in einfacher Art und Weise montieren und/oder demontieren kann. Hierdurch kann insbesondere ein besonders hoher Bedienkomfort bereitgestellt werden.

Die Gebläsekenngröße könnte beispielsweise zumindest eine elektrische Spannung und/oder zumindest eine elektrische Leistung und/oder zumindest eine Umdrehungszahl umfassen. Vorzugsweise umfasst die Gebläsekenngröße zumindest einen elektrischen Strom, welcher insbesondere zu einem Betrieb des Antriebsmotors vorgesehen ist. Die Sensoreinheit könnte beispielsweise zumindest ein Amperemeter aufweisen, welches insbesondere zu der Detektion der Gebläsekenngröße vorgesehen sein könnte. Dadurch kann die Gebläsekenngröße insbesondere besonders einfach detektiert werden, wodurch insbesondere eine unkomplizierte und/oder kostengünstige Ausgestaltung erzielt werden kann.

Ferner wird vorgeschlagen, dass die Filterkenngröße zumindest eine Anwesenheitskenngröße umfasst und insbesondere eine Anwesenheit und/oder eine Abwesenheit der Filtereinheit an der Gebläseeinheit kennzeichnet und/oder charakterisiert. Insbesondere ermittelt die Steuereinheit in Abhängigkeit von der Filterkenngröße zumindest eine Anwesenheit und/oder zumindest eine Abwesenheit der Filtereinheit an der Gebläseeinheit. Die Steuereinheit könnte beispielsweise dazu vorgesehen sein, im Fall eines Garprozesses, in welchem eine Anwesenheit der Filtereinheit vorteilhaft ist, in Abhängigkeit von der Filterkenngröße zumindest eine Information auszugeben, mittels welcher die Steuereinheit einen Bediener insbesondere zu einer Anbringung der Filtereinheit auffordern könnte und/oder mittels welcher die Steuereinheit einem Bediener eine Anwesenheit der Filtereinheit an der Gebläseeinheit bestätigen könnte. Die Steuereinheit könnte beispielsweise dazu vorgesehen sein, im Fall eines Garprozesses, in welchem insbesondere auf eine Anwesenheit der Filtereinheit verzichtet werden kann, in Abhängigkeit von der Filterkenngröße zumindest eine Information auszugeben, mittels welcher die Steuereinheit einen Bediener insbesondere zu einer Loslösung der Filtereinheit auffordern könnte und/oder mittels welcher die Steuereinheit einem Bediener eine Abwesenheit der Filtereinheit an der Gebläseeinheit bestätigen könnte. Dadurch kann insbesondere ein besonders hoher Bedienkomfort erzielt werden. Insbesondere kann ein Bediener in einfacher Weise über eine Anwesenheit und/oder über eine Abwesenheit der Filtereinheit informiert werden, wodurch dem Bediener insbesondere ein aufwendiges Nachschauen abgenommen werden kann.

Zudem wird vorgeschlagen, dass die Filterkenngröße zumindest eine Verschmutzungskenngröße umfasst und insbesondere eine Verschmutzung und/oder einen Verschmutzungsgrad der Filtereinheit kennzeichnet und/oder charakterisiert. Die Steuereinheit ermittelt insbesondere in Abhängigkeit der Filterkenngröße zumindest einen Verschmutzungsgrad der Filtereinheit. Die Ofenvorrichtung weist insbesondere zumindest eine Drucksensoreinheit auf, welche insbesondere zu einer Detektion zumindest einer Druckkenngröße vorgesehen ist. Die Druckkenngröße definiert und/oder charakterisiert insbesondere zumindest einen an der Filtereinheit abfallenden Druck. Die Steuereinheit speichert insbesondere bei einem Start zumindest eines Garprozesses, insbesondere unter bestimmten und/oder vorliegenden Randbedingungen, zumindest eine, insbesondere mittels der Drucksensoreinheit detektierte, Druckkenngröße in der Speichereinheit ab. Insbesondere wiederholt die Steuereinheit, insbesondere mittels der Drucksensoreinheit, zu einem späteren Zeitpunkt, beispielsweise während des Garprozesses und/oder am Ende des Garprozesses, eine Detektion der Druckkenngröße. Die Steuereinheit ermittelt insbesondere aus einem Vergleich der Druckkenngröße zu einem Start des Garprozesses und der Druckkenngröße zu einem späteren Zeitpunkt die Verschmutzungskenngröße und/oder den Verschmutzungsgrad der Filtereinheit. Insbesondere ermittelt die Steuereinheit die Verschmutzungskenngröße, insbesondere ausschließlich, bei Garprozessen, in welchen die Filtereinheit an der Luftführungseinheit angeordnet ist. Beispielsweise könnte die Steuereinheit dazu vorgesehen sein, in Abhängigkeit von der Verschmutzungskenngröße zumindest eine Information auszugeben, mittels welcher die Steuereinheit einen Bediener insbesondere zu einer Reinigung der Filtereinheit auffordern könnte. Die Steuereinheit könnte beispielsweise einen Garprozess in Abhängigkeit von der Verschmutzungskenngröße zulassen und/oder blockieren. Insbesondere könnte die Steuereinheit den Garprozess bei einem zu hohen Verschmutzungsgrad blockieren und insbesondere einen Bediener zu einer Reinigung der Filtereinheit auffordern. Dadurch kann insbesondere eine Verschmutzung der Filtereinheit auf einfache Art und Weise erkannt werden, wodurch insbesondere ein Garprozess mit verschmutzter Filtereinheit vermieden werden kann. Insbesondere kann ein effizienter Garprozess ermöglicht werden, da insbesondere ein Ansaugen durch eine verschmutzte Filtereinheit vermieden und damit ein energiesparender Garprozess ermöglicht werden kann.

Die Steuereinheit könnte bei der Ermittlung der Filterkenngröße, insbesondere zusätzlich zu der Gebläsekenngröße, beispielsweise zumindest eine weitere Gebläsekenngröße berücksichtigen. Vorzugsweise weist die Ofenvorrichtung zumindest eine Gerätetür auf, deren Öffnungszustand die Steuereinheit, insbesondere im Hinblick auf eine Sättigung der Gebläsekenngröße, bei der Ermittlung der Filterkenngröße berücksichtigt. In der Speichereinheit der Steuereinheit ist insbesondere zumindest eine Referenzgebläsekenngröße, welche einem geöffneten Zustand der Gerätetür zugeordnet ist, und zumindest eine Referenzgebläsekenngröße gespeichert, welche einem geschlossenen Zustand der Gerätetür zugeordnet ist. Insbesondere weist die Gebläsekenngröße in Abhängigkeit von dem Öffnungszustand der Gerätetür unterschiedliche Sättigungen auf. Eine Sättigung der Gebläsekenngröße hängt insbesondere von dem Öffnungszustand der Gerätetür ab. Dadurch kann insbesondere eine besonders präzise Ermittlung der Filterkenngröße erzielt werden, wodurch insbesondere ein hoher Bedienkomfort bereitgestellt werden kann.

Ein besonders hoher Bedienkomfort kann insbesondere erreicht werden durch einen Ofen, insbesondere durch einen Induktionsofen, mit zumindest einer erfindungsgemäßen Ofenvorrichtung.

Die Ofenvorrichtung soll hierbei nicht auf die oben beschriebene Anwendung und Ausführungsform beschränkt sein. Insbesondere kann die Ofenvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein als Ofen ausgeführtes Gargerät mit einer als Ofenvorrichtung ausgeführten Gargerätevorrichtung in einer schematischen Darstellung,
- Fig. 2: das Gargerät mit der Gargerätevorrichtung in einem demontierten Zustand einer Filtereinheit der Gargerätevorrichtung in einer schematischen Schnittdarstellung,
- Fig. 3: das Gargerät mit der Gargerätevorrichtung in einem montierten Zustand einer Filtereinheit der Gargerätevorrichtung in einer schematischen Schnittdarstellung und
- Fig. 4: ein Diagramm eines Verfahrens zu einem Betrieb der Gargerätevorrichtung in einer schematischen Darstellung.

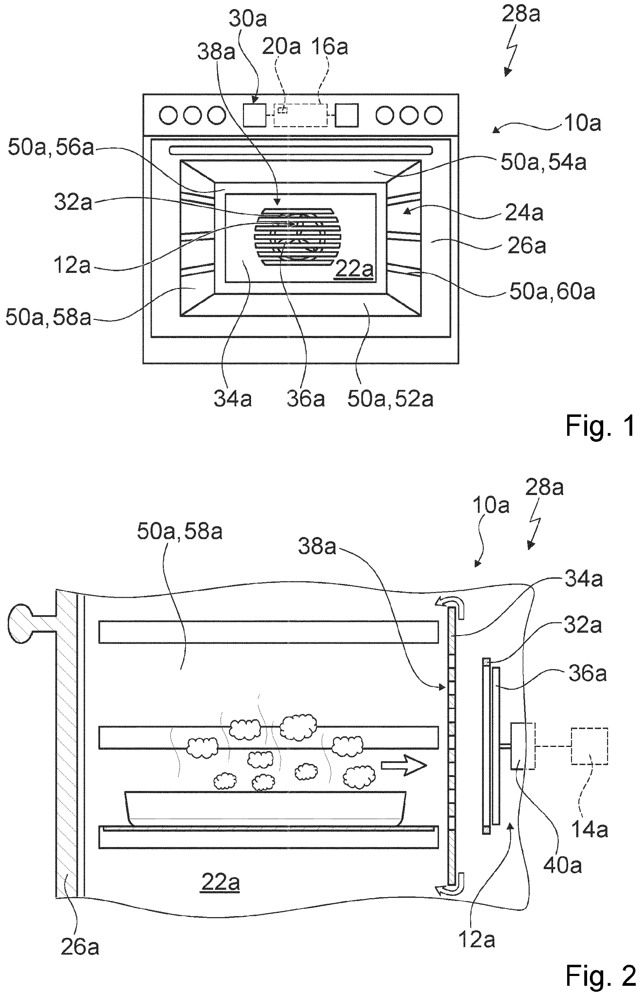

Figur 1 zeigt ein als Ofen ausgeführtes Gargerät 28a, welches insbesondere von einem als Induktionsofen ausgeführten Induktionsgargerät gebildet ist.

Das Gargerät 28a weist insbesondere zumindest eine und vorteilhaft genau eine als Ofenvorrichtung ausgeführte Gargerätevorrichtung 10a auf, welche insbesondere von einer als Induktionsofenvorrichtung ausgeführten Induktionsgargerätevorrichtung gebildet ist.

Die Gargerätevorrichtung 10a weist insbesondere zumindest eine und vorteilhaft genau eine Muffel 24a auf. Die Muffel 24a begrenzt insbesondere zumindest einen und vorteilhaft genau einen Garraum 22a wenigstens teilweise. Die Muffel 24a begrenzt den Garraum 22a insbesondere gemeinsam mit einer Gerätetür 26a wenigstens im Wesentlichen. Die Gargerätevorrichtung 10a weist insbesondere zumindest eine und vorteilhaft zumindest die Gerätetür 26a auf.

Die Gargerätevorrichtung 10a weist im vorliegenden Ausführungsbeispiel insbesondere fünf Garraumwände 50a auf. Die Garraumwände 50a sind insbesondere Teil der Muffel 24a. Insbesondere weist die Muffel 24a die Garraumwände 50a auf. Die Garraumwände 50a definieren insbesondere gemeinsam mit der Gerätetür 26a den Garraum 22a wenigstens im Wesentlichen.

Eine der Garraumwände 50a ist insbesondere als eine Bodenwand 52a ausgebildet. Eine der Garraumwände 50a ist insbesondere als eine Deckenwand 54a ausgebildet. Eine der Garraumwände 50a ist insbesondere als eine Rückwand 56a ausgebildet. Zwei der Garraumwände 50a sind insbesondere jeweils als eine Seitenwand 58a, 60a ausgebildet. Im Folgenden wird insbesondere lediglich eine der Garraumwände 50a beschrieben.

Die Gargerätevorrichtung 10a weist insbesondere zumindest eine und vorteilhaft genau eine Bedienerschnittstelle 30a auf, insbesondere zu einer Eingabe und/oder Auswahl von Betriebsparametern, beispielsweise einer Heizleistung und/oder einer Heizleistungsdichte und/oder einer Heizzone. Die Bedienerschnittstelle 30a ist insbesondere zu einer Ausgabe eines Werts eines Betriebsparameters an einen Bediener vorgesehen.

Die Gargerätevorrichtung 10a weist insbesondere zumindest eine und vorteilhaft genau eine Steuereinheit 16a auf. Die Steuereinheit 16a ist insbesondere dazu vorgesehen, in Abhängigkeit von mittels der Bedienerschnittstelle 30a eingegebenen Betriebsparametern Aktionen auszuführen und/oder Einstellungen zu verändern. Die Steuereinheit 16a regelt insbesondere in einem Heizbetriebszustand eine Energiezufuhr zu zumindest einem Heizelement 32a.

Im vorliegenden Ausführungsbeispiel weist die Gargerätevorrichtung 10a insbesondere zumindest ein und vorteilhaft genau ein, insbesondere zumindest das und vorteilhaft genau das, Heizelement 32a auf. Das Heizelement 32a ist insbesondere als ein Ringheizelement ausgebildet. Insbesondere ist das Heizelement 32a als ein Widerstandsheizelement ausgebildet.

Das Heizelement 32a ist insbesondere in einem rückwärtigen Bereich der Muffel 24a angeordnet. Insbesondere ist das Heizelement 32a innerhalb des Garraums 22a angeordnet.

Insbesondere zusätzlich zu dem Heizelement 32a, könnte die Gargerätevorrichtung 10a beispielsweise zumindest ein zweites Heizelement und vorteilhaft zumindest ein drittes Heizelement aufweisen (nicht dargestellt). Das zweite Heizelement und/oder das dritte Heizelement könnte insbesondere als ein Induktor ausgebildet sein.

Insbesondere könnte das zweite Heizelement außerhalb des Garraums 22a angeordnet sein. Das zweite Heizelement könnte in einer Einbaulage insbesondere oberhalb der Deckenwand 54a und insbesondere in einem Nahbereich der Deckenwand 54a angeordnet sein. Insbesondere könnte das zweite Heizelement zu einer Bereitstellung von Oberhitze vorgesehen sein. In einem Betriebszustand, in welchem die Steuereinheit 16a das zweite Heizelement betreibt, stellt das zweite Heizelement insbesondere eine Oberhitze bereit.

Insbesondere könnte das dritte Heizelement außerhalb des Garraums 22a angeordnet sein. Das dritte Heizelement könnte in einer Einbaulage insbesondere unterhalb der Bodenwand 52a und insbesondere in einem Nahbereich der Bodenwand 52a angeordnet sein. Insbesondere könnte das dritte Heizelement zu einer Bereitstellung von Unterhitze vorgesehen sein. In einem Betriebszustand, in welchem die Steuereinheit 16a das dritte Heizelement betreibt, stellt das dritte Heizelement insbesondere eine Unterhitze bereit.

Die Gargerätevorrichtung 10a weist insbesondere zumindest eine und vorteilhaft genau eine Gebläseeinheit 12a auf. Insbesondere weist die Gebläseeinheit 12a zumindest ein Gebläserad 36a auf. Die Gebläseeinheit 12a ist, insbesondere mittels des Gebläserads 36a, insbesondere zu einer Bereitstellung zumindest eines Luftstroms vorgesehen.

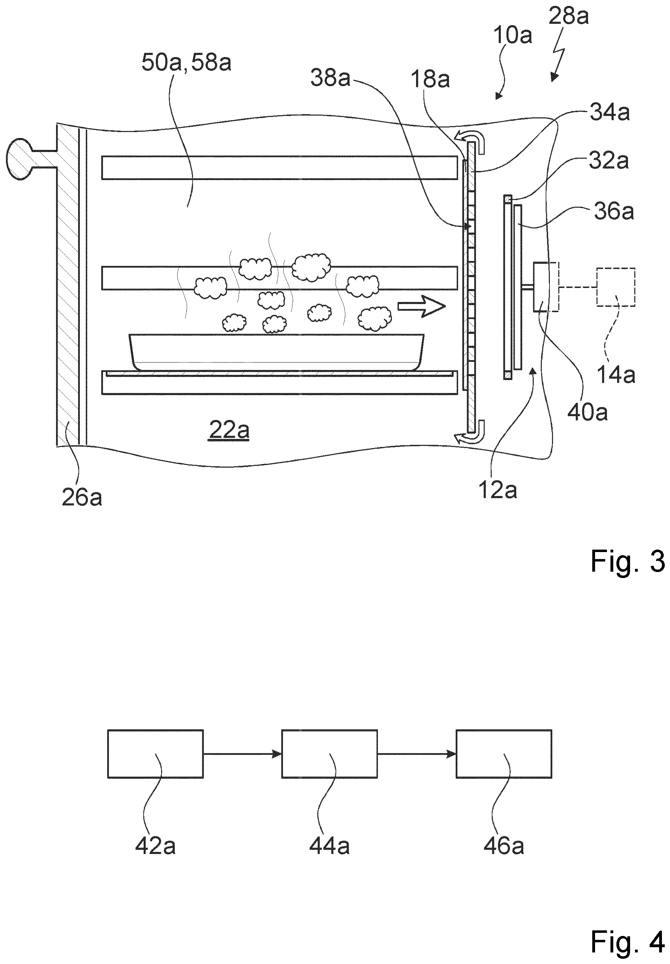

Zu einem Antrieb des Gebläserads 36a weist die Gebläseeinheit 12a insbesondere zumindest einen und vorteilhaft genau einen Antriebsmotor 40a auf (vgl. Figuren 2 und 3). Insbesondere ist der Antriebsmotor 40a als ein Elektromotor ausgebildet. In einem Betriebszustand treibt der Antriebsmotor 40a das Gebläserad 36a insbesondere mittels eines Antriebsmoments an.

Die Gargerätevorrichtung 10a weist insbesondere zumindest eine und vorteilhaft genau eine Luftführungseinheit 34a auf (vgl. Figuren 1 bis 3). Die Luftführungseinheit 34a ist insbesondere innerhalb des Garraums 22a angeordnet. Eine Haupterstreckungsebene der Luftführungseinheit 34a ist in einem montierten Zustand insbesondere wenigstens im Wesentlichen parallel zu einer Haupterstreckungsebene der Rückwand 56a ausgerichtet.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere maximal 8 °, vorteilhaft maximal 5 ° und besonders vorteilhaft maximal 2 ° aufweist.

In einem montierten Zustand ist die Gebläseeinheit 12a, insbesondere das Gebläserad 36a und/oder der Antriebsmotor 40a, auf einer der Rückwand 56a zugewandten Seite der Luftführungseinheit 34a angeordnet. Die Luftführungseinheit 34a ist insbesondere zu einer Führung eines von der Gebläseeinheit 12a hervorgerufenen Luftstroms vorgesehen. In einem Betriebszustand führt die Luftführungseinheit 34a insbesondere einen von der Gebläseeinheit 12a hervorgerufenen Luftstrom.

Die Luftführungseinheit 34a weist insbesondere zumindest einen Durchgangsbereich 38a auf, welcher insbesondere zu einem Durchgang zumindest eines Luftstroms vorgesehen ist. Insbesondere saugt die Gebläseeinheit 12a, insbesondere mittels des Gebläserads 36a, in einem Betriebszustand durch den Durchgangsbereich 38a aus einem Garbereich des Garraums 22a Luft ab.

Die Gargerätevorrichtung 10a weist insbesondere zumindest eine und vorteilhaft genau eine Filtereinheit 18a auf (vgl. Figur 3). Die Filtereinheit 18a ist insbesondere dazu vorgesehen, in einem Betriebszustand zumindest einen von der Gebläseeinheit 12a hervorgerufenen Luftstrom zu filtern und insbesondere in dem Luftstrom befindliche Partikel aus dem Luftstrom wenigstens teilweise zu entfernen.

Die Filtereinheit 18a weist insbesondere zumindest einen und vorteilhaft genau einen Rauchfilter auf. Insbesondere filtert die Filtereinheit 18a mittels des Rauchfilters in einem Betriebszustand zumindest einen von der Gebläseeinheit 12a hervorgerufenen Luftstrom und entfernt insbesondere in dem Luftstrom befindliche Partikel aus dem Luftstrom wenigstens teilweise. Die Filtereinheit 18a ist insbesondere der Gebläseeinheit 12a zugeordnet.

Die Filtereinheit 18a ist insbesondere reversibel an der Luftführungseinheit 34a anordenbar. Die Filtereinheit 18a ist in einem montierten Zustand der Filtereinheit 18a insbesondere werkzeuglos lösbar an der Luftführungseinheit 34a angeordnet. Beispielsweise könnte die Filtereinheit 18a in einem montierten Zustand der Filtereinheit 18a mittels einer Rastverbindung an der Luftführungseinheit 34a angeordnet sein.

In einem montierten Zustand der Filtereinheit 18a ist die Filtereinheit 18a insbesondere innerhalb des Garraums 22a angeordnet. Insbesondere ist die Filtereinheit 18a in einem montierten Zustand der Filtereinheit 18a auf einer der Rückwand 56a abgewandten Seite der Luftführungseinheit 34a angeordnet.

Die Filtereinheit 18a ist in einem montierten Zustand der Filtereinheit 18a insbesondere in Fluidströmungsrichtung eines Ansaugstroms betrachtet vor dem Durchgangsbereich 38a angeordnet. Insbesondere sind der Durchgangsbereich 38a und die Filtereinheit 18a in einem montierten Zustand der Filtereinheit 18a bei einer senkrechten Betrachtung auf eine Haupterstreckungsebene der Luftführungseinheit 34a insbesondere überlappend angeordnet. Bei einer senkrechten Betrachtung auf eine Haupterstreckungsebene der Luftführungseinheit 34a ist der Durchgangsbereich 38a insbesondere innerhalb einer von der Filtereinheit 18a aufgespannten Fläche angeordnet.

Die Gargerätevorrichtung 10a weist insbesondere zumindest eine und vorteilhaft genau eine Sensoreinheit 14a auf (vgl. Figuren 2 und 3). In den Figuren 2 und 3 ist die Sensoreinheit 14a insbesondere lediglich schematisch dargestellt. Die Sensoreinheit 14a ist insbesondere zu einer Detektion zumindest einer elektrischen Gebläsekenngröße der Gebläseeinheit 12a vorgesehen. In einem Betriebszustand detektiert die Sensoreinheit 14a insbesondere die elektrische Gebläsekenngröße der Gebläseeinheit 12a.

Die Sensoreinheit 14a detektiert in einem Betriebszustand insbesondere eine elektrische Gebläsekenngröße des Antriebsmotors 40a der Gebläseeinheit 12a. Im vorliegenden Ausführungsbeispiel umfasst die Gebläsekenngröße zumindest einen elektrischen Strom, welcher insbesondere zu einem Betrieb des Antriebsmotors 40a vorgesehen ist.

Die Steuereinheit 16a ermittelt in einem Betriebszustand insbesondere in Abhängigkeit von der Gebläsekenngröße zumindest eine Filterkenngröße der Filtereinheit 18a, welche der Gebläseeinheit 12a zugeordnet ist. Insbesondere ist die Steuereinheit 16a dazu vorgesehen, in Abhängigkeit von der Gebläsekenngröße die Filterkenngröße der Filtereinheit 18a, welche der Gebläseeinheit 12a zugeordnet ist, zu ermitteln.

Zu der Ermittlung der Filterkenngröße hält die Steuereinheit 16a zumindest eine weitere Gebläsekenngröße wenigstens im Wesentlichen konstant (vgl. auch unten stehende Tabelle). Im vorliegenden Ausführungsbeispiel umfasst die weitere Gebläsekenngröße insbesondere zumindest eine elektrische Spannung, welche insbesondere zu einem Betrieb des Antriebsmotors 40a vorgesehen ist. Insbesondere umfasst die weitere Gebläsekenngröße zumindest eine Umdrehungszahl.

Die Steuereinheit 16a weist insbesondere zumindest eine Speichereinheit 20a auf (vgl. Figur 1). In der Speichereinheit 20a ist insbesondere zumindest eine Referenzgebläsekenngröße gespeichert. Vorteilhaft sind in der Speichereinheit 20a eine Vielzahl an Referenzgebläsekenngrößen gespeichert. Beispielsweise könnten die Referenzgebläsekenngrößen in Form einer Tabelle und/oder in Form einer mathematischen Funktion in der Speichereinheit 20a gespeichert sein. Im Folgenden wird lediglich eine der Referenzgebläsekenngrößen beschrieben.

Insbesondere berücksichtigt die Steuereinheit 16a bei der Ermittlung der Filterkenngröße die Referenzgebläsekenngröße. Bei der Ermittlung der Filterkenngröße vergleicht die Steuereinheit 16a insbesondere die detektierte Gebläsekenngröße mit der gespeicherten Referenzgebläsekenngröße. Die Steuereinheit 16a ermittelt insbesondere aus einem Vergleich der detektierten Gebläsekenngröße mit der Referenzgebläsekenngröße die Filterkenngröße.

In nachfolgender Tabelle ist insbesondere ein Ausschnitt eines Versuchs zu einer Ermittlung der Filterkenngröße dargestellt. Insbesondere sind Versuchsbedingungen und detektierte Gebläsekenngrößen in der Tabelle dargestellt.

| Theo. RPM | Filter | Tür | Spannung [V] | Strom [A] | Leistung [W] | Expert. RPM |
|---|---|---|---|---|---|---|
| 1625 | Nein | Zu | 23,819 | 0,338 | 9,100 | 1603 |
| 1625 | Nein | Auf | 23,829 | 0,379 | 9,000 | 1603 |
| 1625 | Ja | Zu | 23,869 | 0,225 | 5,400 | 1603 |
| 1625 | Ja | Auf | 23,871 | 0,225 | 5,300 | 1603 |
| 1625 | Nein | Zu | 23,840 | 0,316 | 7,500 | 1600 |
| 1625 | Nein | Auf | 23,800 | 0,336 | 8,000 | 1600 |
| 1625 | Ja | Zu | 23,870 | 0,196 | 4,590 | 1600 |
| 1625 | Ja | Auf | 23,871 | 0,200 | 4,750 | 1600 |

In einer ersten Spalte, welche mit "Theo. RPM" bezeichnet ist, ist insbesondere ein theoretischer Wert einer Umdrehungszahl dargestellt. In einer zweiten Spalte, welche mit "Filter" bezeichnet ist, ist insbesondere eine Anwesenheit der Filtereinheit 18a dargestellt. In einer dritten Spalte, welche mit "Tür" bezeichnet ist, ist insbesondere ein Öffnungszustand der Gerätetür 26a dargestellt.

In einer vierten Spalte, welche mit "Spannung [V]" bezeichnet ist, ist insbesondere ein detektierter Wert einer elektrischen Spannung, welche zu einem Betrieb des Antriebsmotors 40a vorgesehen ist, in der Einheit Volt dargestellt. In einer fünften Spalte, welche mit "Strom [A]" bezeichnet ist, ist insbesondere ein detektierter Wert eines elektrischen Stroms, welcher zu einem Betrieb des Antriebsmotors 40a vorgesehen ist, in der Einheit Ampere dargestellt. In einer sechsten Spalte, welche mit "Leistung [W]" bezeichnet ist, ist insbesondere ein detektierter Wert einer elektrischen Leistung, welche zu einem Betrieb des Antriebsmotors 40a vorgesehen ist, in der Einheit Watt dargestellt. In einer siebten Spalte, welche mit "Expert. RPM" bezeichnet ist, ist insbesondere ein detektierter Wert einer Umdrehungszahl dargestellt.

Aus der Tabelle ist insbesondere ersichtlich, dass die Gebläsekenngröße, welche einen elektrischen Strom umfasst, abhängig ist von einer Anwesenheit der Filtereinheit 18a.

Insbesondere ist ein Wert der Gebläsekenngröße, welcher einen elektrischen Strom umfasst, kleiner im Fall einer Anwesenheit der Filtereinheit 18a als im Fall einer Abwesenheit der Filtereinheit 18a. Die Filterkenngröße, welche die Steuereinheit 16a in Abhängigkeit von der Gebläsekenngröße ermittelt, umfasst insbesondere zumindest eine Anwesenheitskenngröße der Filtereinheit 18a.

Wie insbesondere der Tabelle zu entnehmen ist, ist die Abhängigkeit der Gebläsekenngröße insbesondere von der Anwesenheitskenngröße der Filtereinheit 18a unabhängig. Der Tabelle kann insbesondere entnommen werden, dass die Steuereinheit 16a zu der Ermittlung der Filterkenngröße die weitere Gebläsekenngröße, welche zumindest eine Umdrehungszahl umfasst, wenigstens im Wesentlichen konstant hält. Insbesondere hält die Steuereinheit 16a zu der Ermittlung der Filterkenngröße die weitere Gebläsekenngröße, welche zumindest eine elektrische Spannung umfasst, wenigstens im Wesentlichen konstant.

Bei der Ermittlung der Filterkenngröße berücksichtigt die Steuereinheit 16a insbesondere zumindest einen Öffnungszustand der Gerätetür 26a. Insbesondere beeinflusst der Öffnungszustand der Gerätetür 26a einen Sättigungswert der Gebläsekenngröße.

Insbesondere zusätzlich zu der Filterkenngröße, welche zumindest eine Anwesenheitskenngröße der Filtereinheit 18a umfasst, ermittelt die Steuereinheit 16a in Abhängigkeit von der Gebläsekenngröße zumindest eine Filterkenngröße, welche zumindest eine Verschmutzungskenngröße der Filtereinheit 18a umfasst. Die Filterkenngröße, welche die Steuereinheit 16a in Abhängigkeit von der Gebläsekenngröße ermittelt, umfasst insbesondere zumindest eine Verschmutzungskenngröße der Filtereinheit 18a.

In einem Verfahren zu einem Betrieb der Gargerätevorrichtung 10a wird in Abhängigkeit von der Gebläsekenngröße zumindest eine Filterkenngröße der Filtereinheit 18a, welche der Gebläseeinheit 12a zugeordnet ist, ermittelt. Insbesondere in einem Detektionsschritt 42a, wird die elektrische Gebläsekenngröße der Gebläseeinheit 12a, insbesondere mittels der Sensoreinheit 14a, detektiert (vgl. Figur 4).

Insbesondere in einem Ermittlungsschritt 44a, wird in Abhängigkeit von der Gebläsekenngröße die Filterkenngröße der Filtereinheit 18a, welche der Gebläseeinheit 12a zugeordnet ist, ermittelt. Bei der Ermittlung der Filterkenngröße wird, insbesondere in dem Ermittlungsschritt 44a, die Referenzgebläsekenngröße berücksichtigt. Insbesondere wird zu der Ermittlung der Filterkenngröße, insbesondere in dem Detektionsschritt 42a und/oder in dem Ermittlungsschritt 44a, die weitere Gebläsekenngröße konstant gehalten.

Insbesondere in einem Aktionsschritt 46a, wird, insbesondere durch die Steuereinheit 16a, insbesondere in Abhängigkeit von der ermittelten Filterkenngröße zumindest eine Aktion zumindest eingeleitet und vorteilhaft ausgeführt. Die Aktion könnte beispielsweise eine Ausgabe zumindest einer Information an einen Bediener sein. Insbesondere alternativ oder zusätzlich, könnte die Aktion insbesondere eine Ausführung eines Garprogramms und/oder eines Garprozesses sein.

### Bezugszeichen

- 10: Gargerätevorrichtung
- 12: Gebläseeinheit
- 14: Sensoreinheit
- 16: Steuereinheit
- 18: Filtereinheit
- 20: Speichereinheit
- 22: Garraum
- 24: Muffel
- 26: Gerätetür
- 28: Gargerät
- 30: Bedienerschnittstelle
- 32: Heizelement
- 34: Luftführungseinheit
- 36: Gebläserad
- 38: Durchgangsbereich
- 40: Antriebsmotor
- 42: Detektionsschritt
- 44: Ermittlungsschritt
- 46: Aktionsschritt
- 50: Garraumwand
- 52: Bodenwand
- 54: Deckenwand
- 56: Rückwand
- 58: Seitenwand
- 60: Seitenwand

## Patentansprüche

1. Ofenvorrichtung, insbesondere Induktionsofenvorrichtung, mit zumindest einer Gebläseeinheit (12a) und mit zumindest einer Sensoreinheit (14a), welche zu einer Detektion zumindest einer elektrischen Gebläsekenngröße der Gebläseeinheit (12a) vorgesehen ist, **gekennzeichnet durch** zumindest eine Steuereinheit (16a), welche dazu vorgesehen ist, in Abhängigkeit von der Gebläsekenngröße zumindest eine Filterkenngröße zumindest einer Filtereinheit (18a), welche der Gebläseeinheit (12a) zugeordnet ist, zu ermitteln.

2. Ofenvorrichtung nach Anspruch 1, **dadurch gekennzeichnet, dass** die Steuereinheit (16a) zu der Ermittlung der Filterkenngröße zumindest eine weitere Gebläsekenngröße wenigstens im Wesentlichen konstant hält.

3. Ofenvorrichtung nach Anspruch 1 oder 2, **dadurch gekennzeichnet, dass** die Steuereinheit (16a) zumindest eine Speichereinheit (20a) aufweist, in welcher zumindest eine Referenzgebläsekenngröße gespeichert ist, welche die Steuereinheit (16a) bei der Ermittlung der Filterkenngröße berücksichtigt.

4. Ofenvorrichtung nach einem der vorhergehenden Ansprüche, **gekennzeichnet durch** die Filtereinheit (18a) und durch zumindest eine Luftführungseinheit (34a), an welcher die Filtereinheit (18a) reversibel anordenbar ist.

5. Ofenvorrichtung nach Anspruch 4, **dadurch gekennzeichnet, dass** die Filtereinheit (18a) zumindest einen Rauchfilter aufweist.

6. Ofenvorrichtung nach Anspruch 4 oder 5, **gekennzeichnet durch** zumindest eine Muffel (24a), welche zumindest einen Garraum (22a) wenigstens teilweise begrenzt, innerhalb welchem die Filtereinheit (18a) in wenigstens einem montierten Zustand der Filtereinheit (18a) angeordnet ist.

7. Ofenvorrichtung nach einem der vorhergehenden Ansprüche, **dadurch gekennzeichnet, dass** die Gebläsekenngröße zumindest einen elektrischen Strom umfasst.

8. Ofenvorrichtung nach einem der vorhergehenden Ansprüche, **dadurch gekennzeichnet, dass** die Filterkenngröße zumindest eine Anwesenheitskenngröße umfasst.

9. Ofenvorrichtung nach einem der vorhergehenden Ansprüche, **dadurch gekennzeichnet, dass** die Filterkenngröße zumindest eine Verschmutzungskenngröße umfasst.

10. Ofenvorrichtung nach einem der vorhergehenden Ansprüche, **gekennzeichnet durch** zumindest eine Gerätetür (26a), deren Öffnungszustand die Steuereinheit (16a) bei der Ermittlung der Filterkenngröße berücksichtigt.

11. Ofen, insbesondere Induktionsofen, mit zumindest einer Ofenvorrichtung nach einem der vorhergehenden Ansprüche.

## Claims

1. Oven apparatus, in particular induction oven apparatus, having at least one fan unit (12a) and having at least one sensor unit (14a) that is provided for a detection of at least one electrical fan parameter of the fan unit (12a), **characterised by** at least one control unit (16a) that is provided so as to determine, in dependence upon the fan parameter, at least one filter parameter of at least one filter unit (18a), which is allocated to the fan unit (12a).

2. Oven apparatus according to claim 1, **characterised in that** the control unit (16a) maintains at least one further fan parameter as at least essentially constant for the determination of the filter parameter.

3. Oven apparatus according to claim 1 or 2, **characterised in that** the control unit (16a) has at least one storage unit (20a) and at least one reference fan parameter is stored in said storage unit and the control unit (16a) takes said reference fan parameter into consideration in the case of determining the filter parameter.

4. Oven apparatus according to one of the preceding claims, **characterised by** the filter unit (18a) and by at least one air guiding unit (34a) and it is possible to arrange the filter unit (18a) in a reversible manner on said air guiding unit.

5. Oven apparatus according to claim 4, **characterised in that** the filter unit (18a) has at least one smoke filter.

6. Oven apparatus according to claim 4 or 5, **characterised by** at least one muffle (24a) that at least in part delimits at least one cooking compartment (22a) and the filter unit (18a) is arranged within said cooking compartment in at least one assembled state of the filter unit (18a).

7. Oven apparatus according to one of the preceding claims, **characterised in that** the fan parameter comprises at least one electrical current.

8. Oven apparatus according to one of the preceding claims, **characterised in that** the filter parameter comprises at least one presence parameter.

9. Oven apparatus according to one of the preceding claims, **characterised in that** the filter parameter comprises at least one soiling parameter.

10. Oven apparatus according to one of the preceding claims, **characterised by** at least one appliance door (26a) and the control unit (16a) takes into consideration the opening state of said appliance door in the case of determining the filter parameter.

11. Oven, in particular an induction oven, having at least one oven apparatus according to one of the preceding claims.

## Revendications

1. Dispositif de four, en particulier dispositif de four à induction, comprenant au moins un ensemble de ventilateur (12a) et au moins un ensemble de capteur (14a), qui est configuré pour détecter au moins un paramètre électrique de ventilateur de l'ensemble de ventilateur (12a),
**caractérisé par** au moins une unité de commande (16a), qui est configurée pour déterminer en fonction du paramètre de ventilateur au moins un paramètre de filtration d'au moins un ensemble filtre (18a), qui est associé à l'ensemble de ventilateur (12a).

2. Dispositif de four selon la revendication 1, **caractérisé en ce que** l'unité de commande (16a) maintient constante au moins essentiellement un autre paramètre de ventilateur pour déterminer le paramètre de filtration.

3. Dispositif de four selon la revendication 1 ou 2, **caractérisé en ce que** l'unité de commande (16a) comprend au moins une unité de mémoire (20a), dans laquelle au moins un paramètre de ventilateur de référence est stocké, que l'unité de commande (16a) prend en compte pour déterminer le paramètre de filtration.

4. Dispositif de four selon l'une des revendications précédentes, **caractérisé par** l'ensemble filtre (18a) et par au moins une unité de guidage d'air (34a), sur laquelle l'ensemble filtre (18a) peut être disposée de façon réversible.

5. Dispositif de four selon la revendication 4, **caractérisé en ce que** l'ensemble filtre (18a) comprend au moins un filtre à fumées.

6. Dispositif de four selon la revendication 4 ou 5, **caractérisé par** au moins un moufle (24a), qui délimite au moins en partie au moins un espace de cuisson (22a), à l'intérieur duquel l'ensemble filtre (18a) est disposé dans au moins un état monté de l'ensemble filtre (18a).

7. Dispositif de four selon l'une des revendications précédentes, **caractérisé en ce que** le paramètre de ventilateur comprend au moins un courant électrique.

8. Dispositif de four selon l'une des revendications précédentes, **caractérisé en ce que** le paramètre de filtration comprend au moins un paramètre de présence.

9. Dispositif de four selon l'une des revendications précédentes, **caractérisé en ce que** le paramètre de filtration comprend au moins un paramètre d'encrassement.

10. Dispositif de four selon l'une des revendications précédentes, **caractérisé par** au moins une porte d'appareil (26a), dont l'état d'ouverture est pris en compte par l'unité de commande (16a) pour déterminer le paramètre de filtration.

11. Four, en particulier four à induction, comprenant au moins un dispositif de four selon l'une des revendications précédentes.
